# EUROPÄISCHE PATENTSCHRIFT

(11) **EP 0 944 214 B1**
(45) Veröffentlichungstag und Bekanntmachung des Hinweises auf die Patenterteilung: **26.05.2004**
(21) Anmeldenummer: 99105490.9
(22) Anmeldetag: 17.03.1999
(51) Int. Cl.: H04L 27/26

(54) **Verfahren zur Erkennung von Übertragungsfehlern in einem Multiträgerdatenübertragungssystem**
Method for detecting transmission errors in a multicarrier transmission system
Procédé pour la détection d'erreurs de transmission dans un système de transmission à modulation multiporteuse

(30) Priorität: 18.03.1998 DE 19811830
(43) Veröffentlichungstag der Anmeldung: 22.09.1999
(73) Patentinhaber: SIEMENS AKTIENGESELLSCHAFT, 80333 München (DE)
(72) Erfinder: Zirwas, Wolfgang, 82194 Gröbenzell (DE)

(56) Entgegenhaltungen:
- WO-A-96/37062
- US-A- 5 610 908
- PATENT ABSTRACTS OF JAPAN vol. 1995, no. 09, 31. Oktober 1995 (1995-10-31) & JP 07 143098 A (TOSHIBA CORP), 2. Juni 1995 (1995-06-02)
- AMERICO BRAJAL ET AL: "COMPENSATION OF NONLINEAR DISTORTIONS FOR OTHOGONAL MULTICARRIER SCHEMES USING PREDISTORTION" PROCEEDINGS OF THE GLOBAL TELECOMMUNICATIONS CONFERENCE (GLOBECOM). SAN FRANCISCO, NOV. 28 - DEC. 2, 1994, NEW YORK, IEEE, US, Bd. 3, 28. November 1994 (1994-11-28), Seiten 1909-1914, XP000488852 ISBN: 0-7803-1821-8
- PATENT ABSTRACTS OF JAPAN vol. 1998, no. 08, 30. Juni 1998 (1998-06-30) & JP 10 065466 A (ANADEIJITSUKUSU INC), 6. März 1998 (1998-03-06)

## Beschreibung

Verfahren zur Bestimmung von Übertragungsfehlern bei einem mit Hilfe eines Multiträgerverfahrens übermittelten, seriellen Datenstrom.

Bei drahtlosen, auf Funkkanälen basierenden Kommunikationsnetzen, insbesondere bei Punkt-zu-Multipunkt Funk-Zubringernetzen - auch als "Radio In The Local Loop" bzw. "RLL" bezeichnet - sind mehrere Netzabschlußeinheiten jeweils über einen oder mehrere Funkkanäle an eine Basisstation - auch als "Radio Base Station" bzw. "RBS" bezeichnet - angeschlossen. Im telcom report Nr. 18 (1995), Heft 1 "Drahtlos zum Freizeichen", Seite 36, 37 ist beispielsweise ein drahtloses Zubringernetz für die drahtlose Sprach- und Datenkommunikation beschrieben. Das beschriebene Kommunikationssystem stellt einen RLL-Teilnehmeranschluß in Kombination mit moderner Breitband-Infrastruktur - z.B. "Fiber to the curb" - dar, welches in kurzer Zeit und ohne größeren Aufwand anstelle der Verlegung von drahtgebundenen Anschlußleitungen realisierbar ist. Die den einzelnen Teilnehmern zugeordneten Netzabschlußeinheiten RNT sind über das Übertragungsmedium "Funkkanal" und die Basisstation RBS an ein übergeordnetes Kommunikationsnetz, beispielsweise an das ISDN-orientierte Festnetz, angeschlossen.

Durch die zunehmende Verbreitung von Multimedia-Anwendungen müssen hochbitratige Datenströme schnell und sicher über Kommunikationsnetze, insbesondere über drahtlose Kommunikationsnetze bzw. über Mobilfunksysteme übertragen werden, wobei hohe Anforderungen an die auf nur aufwendig abzuschätzende und fehleranfällige Funkkanäle basierenden Funkübertragungssysteme gestellt werden. Da im allgemeinen zwischen einer Sende- und einer Empfangseinrichtung keine Sichtverbindung besteht, wird ein ausgesendetes Signal nur durch Streuung und Reflexionen an die entsprechende Empfangseinrichtung übermittelt. In der Druckschrift "Mitteilungen der TU-Braunschweig, Mobilfunktechnik für Multimedia-Anwendungen", Professor H.

Rohling, Jahrgang XXXI, Heft 1-1996 ist beispielsweise in Abbildung 5 eine Sende/Empfangs-Situation anschaulich dargestellt, bei der ein Sendesignal über verschiedene Umwege und mit unterschiedlichen Laufzeiten, gleichzeitig, mehrfach und in additiv überlagerter Form empfangen wird, wodurch sich in der Empfangseinheit unterschiedliche zeitverschobene Versionen des selben empfangenen Sendesignals überlagern. Diese Überlagerung führt einerseits zu einer frequenzselektiven Dämpfung des empfangenen Gesamtsignals - in Abhängigkeit von den Laufzeitunterschieden zwischen den einzelnen Ausbreitungspfaden - sowie andererseits zu einer gegenseitigen Störung von zeitlich aufeinanderfolgenden, zu übermittelnde Informationen repräsentierenden Datenbits - auch als Intersymbol-Interferenz bezeichnet. Die Intersymbol-Interferenzen sind um so stärker, je größer die Laufzeitunterschiede zwischen den einzelnen Signal- bzw. Ausbreitungspfaden sind und je höher die zu übertragende Datenrate ist. Bei der bisher in Mobilfunksystemen üblichen Übertragungstechnik ist deshalb eine Entzerrung des empfangenen Signals erforderlich, die jedoch technisch relativ aufwendig ist. Diese Entzerrung ist in hochbitratige Datenströme übertragenden Systemen mit geringen Symboldauern besonders aufwendig, da sich die verursachten Intersymbol-Interferenzen über viele benachbarte Symbole bzw. Sendesymbole erstrecken. Aufgrund des hohen technischen und wirtschaftlichen Aufwandes für die Realisierung einer entsprechenden Kanalentzerrung in derartigen hohe Datenübertragungsraten verarbeitenden, drahtlosen Übertragungssystemen wird für die Übertragung von breitbandigen Datenströmen - beispielsweise von Videodatenströmen - eine alternative Übertragungstechnik eingesetzt, die auf dem sogenannten Multiträgerverfahren basiert - auch als Orthogonal Frequency Division Multplexing OFDM bezeichnet. Bei der OFDM-Übertragungstechnik werden die zu übermittelnden Informationen bzw. wird der zu übermittelnde Datenstrom innerhalb des Funkkanals auf mehrere Subkanäle bzw. Subträger aufgeteilt bzw. parallelisiert, wobei die zu übermittelnden Informationen jeweils mit einer relativ geringen Datenrate, aber in additiv überlagerter Form parallel übertragen werden. Die OFDM-Übertragungstechnik wird beispielsweise beim Digitalen Terrestrischen Rundfunk - auch als Digital Audio Broadcasting DAB bezeichnet - und für das Digitale Terrestrische Fernsehen - auch als Digital Terrestrial Video Broadcasting DTVB bezeichnet - eingesetzt.

Bei der OFDM-Übertragungstechnik wird durch Einfügen eines zusätzlichen zeitlichen Guard-Intervalls die durch Störungen im Funkkanal hervorgerufenen Intersymbol-Interferenzen im Empfänger vollständig vermieden, wodurch die erwarteten Übertragungsstörungen erheblich reduziert werden.

Aus JP 0714 3098 ist ein OFDM Transmitter und ein OFDM Receiver bekannt, mit deren Hilfe Übertragungsstörungen reduziert werden.

In "Compensation of nonlinear distortions for orthogonal multicarrier schemes using predistortion", Brajal et al, Proceedings Of The Global Telecommunications Conference (Globecom), San Francisco, Nov. 28-Dec. 2, 1994, New York, IEEE, US (28-11-1994), 3, Seiten 1909-1914, werden Eigenschaften von vorverzerrten OFDM-Signalen bei einer Übertragung analysiert. In der genannten Druckschrift "Mobilfunktechnik für Multimedia-Anwendungen" ist in Abbildung 6, Seite 46 das OFDM-Übertragungsverfahren näher erläutert.

Ausgehend von einem seriellen Datenstrom wird im Sender für die Modulation der beispielsweise n Subträger eine Seriell/Parallel-Wandlung durchgeführt, wobei für den zeitlich i-ten OFDM-Block mit der Blocklänge T' und dem j-ten Subträger jeweils ein binäres Codewort mit der Wortbreite k - die Wortbreite k ist vom eingesetzten Modulationsverfahren abhängig - gebildet wird. Aus den gebildeten Codewörtern werden mit Hilfe eines senderspezifischen Modulationsverfahrens die entsprechenden komplexen Modulationssymbole - im folgenden auch als Sendesymbole bezeichnet - gebildet, wobei zu jedem Zeitpunkt i jedem der k Subträger ein Sendesymbol zugeordnet ist. Der Abstand der einzelnen Subträger ist durch Δf = 1-T' festgelegt, wodurch die Orthogonalität der einzelnen Subträgersignale im Nutzintervall [0,T'] garantiert wird. Durch Multiplikation der Schwingungen der einzelnen Subträger mit den entsprechenden Modulationssymbolen bzw. Sendesymbolen und der anschließende Addition der gebildeten Modulationsprodukte wird das entsprechende zeitdiskrete Sendesignal für den zeitlich i-ten OFDM-Block erzeugt. Dieses Sendesignal wird in abgetasteter, d.h. zeitdiskreter Form durch eine Inverse, Diskrete Fourier-Transformation - IDFT - direkt aus den Modulationssymbolen bzw. Sendesymbolen der einzelnen betrachteten Subträger berechnet. Zur vollständigen Vermeidung von Intersymbol-Interferenzen wird jedem OFDM-Block im Zeitbereich ein Guard-Intervall T_{G} vorangestellt, was einer Verlängerung des zeitdiskreten OFDM-Signals im Intervall [-T_{G}, 0] bewirkt - vergleiche Abbildung 7. Das eingefügte Guard-Intervall T_{G} entspricht vorteilhaft der maximal auftretenden Laufzeitdifferenz zwischen den einzelnen bei der Funkübertragung entstehenden Ausbreitungspfaden. Durch das empfängerseitige Entfernen des hinzugefügten Guard-Intervalls T_{G} wird beispielsweise eine Störung des i-ten OFDM-Blocks durch das zeitlich benachbarte OFDM-Signal zum Zeitpunkt i-1 vermieden, so daß im Intervall [0,T'] das Sendesignal über sämtliche Umwegpfade empfangen wird und die Orthogonalität zwischen den Subträgern im vollen Maße im Empfänger erhalten bleibt. Bei einer großen Anzahl von Subträgern - beispielsweise n = 256 Subträger - und entsprechend langen Symboldauern T = T' + T_{G} ist die Dauer T_{G} klein gegenüber T, so daß die Einfügung des Guard-Intervalls die Bandbreite effizient nicht wesentlich beeinträchtigt und ein nur geringer Overhead entsteht. Nach Abtastung des am Eingang des Empfängers empfangenen Sendesignals im Basisband - durch einen A/D-Wandler - und nach Extraktion des Nutzintervalls - d.h. nach Beseitigung des Guard-Intervalls T_{G} - wird mit Hilfe einer Diskreten Fourier-Transformation - DFT - das empfangene Sendesignal in den Frequenzbereich transformiert, d.h. es werden die empfangenen Modulationssymbole bzw. die empfangenen Empfangssymbole bestimmt. Aus den bestimmten Empfangssymbolen werden mittels eines geeigneten Demodulationsverfahrens die entsprechenden Empfangs-Codewörter erzeugt und aus diesen wird durch parallel/seriell-Wandlung der empfangene, serielle Datenstrom gebildet. Durch die Vermeidung von Intersymbol-Interferenzen bei OFDM-Übertragungsverfahren wird der Rechenaufwand im jeweiligen Empfänger erheblich reduziert, wodurch die OFDM-Übertragungstechnik beispielsweise für die terrestrische Übertragung digitaler Fernsehsignale eingesetzt wird - beispielsweise zur Übertragung von breitbandigen Datenströmen mit einer Übertragungsrate von 34 MBit/s pro Funkkanal.

Für die Übermittlung des mit Hilfe des OFDM-Übertragungsverfahrens zu übermittelnden, seriellen Datenstromes werden absolute bzw. differentielle Modulationsverfahren sowie entsprechende kohärente bzw. inkohärente Demodulationsverfahren eingesetzt. Obwohl bei der Übermittlung des gebildeten Sendesignals über das Übertragungsmedium "Funkkanal" die Orthogonalität der Subträger durch den Einsatz des OFDM-Übertragungsverfahrens im vollen Umfang erhalten bleibt, werden durch die Übertragungseigenschaften des Funkkanals die übertragenen, frequenzdiskreten Sendesymbole sowohl in der Phase als auch in der Amplitude verändert. Der Amplituden- und Phaseneinfluß des Funkkanals erfolgt subträgerspezifisch auf den einzelnen jeweils sehr schmalbandigen Subträgern; zudem überlagern Rauschsignale additiv das übertragene Nutzsignal. Bei Einsatz von kohärenten Demodulationsverfahren ist eine Kanalschätzung erforderlich, die je nach Qualitätsanforderungen auf einen erheblichen technischen und wirtschaftlichen Realisierungsaufwand beruhen und zudem die Leistungsfähigkeit des Übertragungssystems vermindern. Vorteilhaft werden differentielle Modulationsverfahren sowie entsprechende inkohärente Demodulationsverfahren eingesetzt, bei denen auf eine aufwendige Funkkanalschätzung verzichtet werden kann. Bei differentiellen Modulationsverfahren werden die zu übermittelnden Informationen nicht durch Auswahl der Modulationssymbole bzw. der frequenzdiskreten Sendesymbole direkt übertragen, sondern durch Änderung der zeitlich benachbarten, frequenzdiskreten Sendesymbole auf dem selben Subträger. Beispiele für differentielle Modulationsverfahren sind die 64-stufige 64-DPSK - Differential Phase Shift Keying - sowie die 64-DAPSK - Differential Amplitude and Phase Shift Keying. Bei der 64-DAPSK werden sowohl die Amplitude als auch gleichzeitig die Phase differentiell moduliert.

Zur Realisierung von drahtlosen, auf Funkkanälen basierenden Kommunikationsnetzen, insbesondere für Frequenzen im Millimeter-Wellenbereich - z.B. 38 GHz - müssen zur Erreichung sinnvoller Antennen-Gewinne - beispielsweise bei Basisstationen um 10 dBi und bei Netzabschlußeinheiten 30 bis 35 dBi - die in den Netzabschlußeinheiten und in der Basisstation angeordneten Verstärker eine Sendeleistung von mindestens 100 mW bzw. 20 dBm aufweisen. Diese Sendeleistungen sind zwar mit Hohlleiterkomponenten erreichbar, Hohlleiterkomponenten sind jedoch voluminös sowie technisch und wirtschaftlich sehr aufwendig zu realisieren. Dagegen sind GaAs-MMICs - Monolitic Microwave Integrated Circuits - mit geringem wirtschaftlichen und technischen Aufwand und mit kleinem Volumen realisierbar - beispielsweise durch Integration auf einer Keramik. Nachteilig weisen die GaAs-MMIC's-Verstärker - auch als HPA (High Power Amplifier) bezeichnet - nur eine begrenzte Sendeleistung im Bereich von 20 dBm auf. Bei Einsatz von GaAs-MMIC's in zu realisierenden, drahtlosen Kommunikationsnetzen müssen diese zur Erreichung der geforderten Sendeleistung von etwa 20 dBm in der Sättigung betrieben werden, d.h. der Verstärker wird extrem nichtlinear betrieben, insbesondere für modulierte Sendesignale mit einer Amplitudenschwankungen aufweisenden Hüllkurve. Wird beispielsweise ein mit Hilfe des OFDM-Übertragungsverfahren erzeugtes und mit Hilfe eines Spektrum-Shaping-Filters gefiltertes - zur Einhaltung von genormten Spektrumsmasken - Sendesignal von einem derartigen stark in der Sättigung betriebenen GaAs-Verstärkers verstärkt bzw. begrenzt, werden die zuvor mit Hilfe des Spektrum-Shaping-Filters unterdrückten Seitenbänder des Sendesignals wieder erzeugt, was zu einer unerwünschten Störung der Nachbarkanäle - auch als ACI bzw. Adjacent-Channel-Interference bezeichnet - sowie zu einer Verletzung der Spektrumsmaske und zu einer Signalverzerrung im Empfänger führt. Um eine derartige Verzerrung des Sendesignals zu vermeiden, muß der nichtlineare Verstärker mit einem entsprechenden Backoff betrieben werden, um einen Sättigungsbetrieb zu vermeiden. Wird der Backoff zu klein gewählt, führen die dadurch hervorgerufenen Signalverzerrungen zu einem unerwünschten Übersprechen zwischen den einzelnen Subträgern. Dieses Übersprechen verkleinert das S/N-Verhältnis - Signal to Noise - einzelner Subträger und erhöht damit die Bitfehlerrate - auch als BER bezeichnet.

Der Erfindung liegt die Aufgabe zugrunde, die in drahtlosen Kommunikationsnetzen eingesetzten Sendeeinrichtungen wirtschaftlicher zu realisieren. Die Aufgabe wird durch die Merkmale des Patentanspruchs 1 gelöst.

Der wesentliche Aspekt des erfindungsgemäßen Verfahrens zur Bestimmung von Übertragungsfehlern bei einem mit Hilfe eines Multiträgerverfahrens übermittelten, seriellen Datenstromes besteht darin, daß in einem Sender der serielle Datenstrom in k-Bit breite Codewörter parallelisiert wird (a) und aus den gebildeten Codewörtern mit Hilfe eines senderspezifischen Modulationsverfahrens entsprechende frequenzdiskrete Sendesymbole gebildet werden (b). Die gebildeten, frequenzdiskreten Sendesymbole werden mit Hilfe einer Inversen Diskreten Fourier-Transformation in ein zeitdiskretes OFDM-Sendesignal konvertiert (c) und anschließend das gebildete, zeitdiskrete OFDM-Sendesignal amplitudenbegrenzt (d). In einem Empfänger werden aus dem empfangenen, zeitdiskreten OFDM-Sendesignal mit Hilfe der Diskreten Fourier-Transformation im empfangenen OFDM-Sendesignal enthaltene, frequenzdiskrete Empfangssymbole bestimmt (e) und aus den bestimmten, frequenzdiskreten Empfangssymbolen durch ein entsprechendes Demodulationsverfahren k-Bit breite Schätz-Codewörter gebildet (f). Aus den gebildeten Schätz-Codewörtern werden gemäß der Schritte b), c) und d) ein weiteres rekonstruiertes, zeitdiskretes OFDM-Sendesignal gebildet (g), wobei aus dem gebildeten, rekonstruierten, zeitdiskreten OFDM-Sendesignal mit Hilfe der Diskreten Fourier-Transformation frequenzdiskrete, rekonstruierte Empfangssymbole bestimmt werden (h). Anschließend wird die Differenz zwischen den bestimmten frequenzdiskreten Empfangssymbolen und den bestimmten frequenzdiskreten, rekonstruierten Empfangssymbolen bestimmt (i) und in Abhängigkeit vom bestimmten Differenzergebnis Übertragungsfehler erkannt und eine entsprechende Fehler-behandlungsroutine ausgeführt (j) - Anspruch 2.

Der wesentliche Vorteil des erfindungsgemäßen Verfahrens besteht darin, daß drahtlose und insbesondere hochbitratige Kommunikationsnetze mit geringem wirtschaftlichen und technischen Aufwand durch den Einsatz kostengünstiger Sendeverstärker - beispielsweise GaAs MMIC's - realisierbar sind. Vorteilhaft kann bei Einsatz derartiger kostengünstiger Verstärker für die Übermittlung hochbitratiger Datenströme das OFDM-Übertragungsverfahren eingesetzt werden, da ein durch das OFDM-Übertragungsverfahren erzeugtes und starke Amplitudenschwankungen aufweisendes Sendesignal trotz dem großen Verhältnis von Spitzenleistung zu mittlerer Leistung - d.h. der Crestfaktor des OFDM-Sendesignals weist einen großen Wert auf - mit geringer Fehlerrate über das Übertragungsmedium "Funkkanal" übermittelbar ist. Vorteilhaft können durch das erfindungsgemäße Verfahren nicht lineare Verstärker mit begrenzter Sendeleistung mit einem kleinen Backoff, d.h. mit nur geringen Sendeleistungsverlusten betrieben werden, wobei durch Signalverzerrungen verursachte Bitfehler erkannt werden, bzw. korrigierbar sind; insbesondere kann bei Einsatz von eine begrenzte Sendeleistung aufweisenden GaAs MMIC's die zur Verfügung stehende Sendeleistung optimal genutzt werden.

Gemäß einer vorteilhafter Ausgestaltung wird bei einer Überschreitung des Differenzwertes zwischen einem frequenzdiskreten Empfangssymbol und dem entsprechenden frequenzdiskreten, rekonstruierten Empfangssymbol über einen vorgebbaren Schwellenwert ein Empfangssymbol-individueller Übertragungsfehler erkannt - Anspruch 3. Vorteilhaft kann das Erkennen von Übertragungsfehlern mit Hilfe kostengünstiger Schwellenwert-Entscheider realisiert werden.

Gemäß einer weiteren vorteilhaften Ausgestaltung wird bei Erkennen eines Empfangssymbol-individuellen Übertragungsfehlers das entsprechende fehlerhafte, frequenzdiskrete Empfangssymbol oder das daraus durch Demodulation gebildete k-Bit breite Schätz-Codewort entsprechend korrigiert - Anspruch 4, wodurch die Bitfehlerrate BER des zu übermittelnden, seriellen Datenstromes minimiert und somit die Übertragungsqualität der zu übermittelnden Informationen weiter verbessert wird.

Gemäß einer weiteren vorteilhaften Ausgestaltung wird bei Erkennen eines Empfangssymbol-individuellen Übertragungsfehlers das entsprechende k-Bit breite Schätz-Codewort invertiert - Anspruch 5 -, wobei die Invertierung durch den Einsatz kostengünstiger Invertierer realisierbar ist.

Vorteilhaft ist die Inverse, Diskrete Fourier-Transformation durch eine optimierte Inverse "Fast Fourier-Transformation" - FFT - und die Diskrete Fourier-Transformation durch eine optimierte "Fast Fourier-Transformation" - FFT - realisiert - Anspruch 6. Durch den Einsatz der zeitoptimierten "Fast Fourier-Transformation" wird die Ablaufgeschwindigkeit des erfindungsgemäßen Verfahrens erhöht. Des weiteren sind integrierte Schaltungen zur Durchführung der Diskreten Fourier-Transformation als auch der Inversen, Diskreten Fourier-Transformation verfügbar, wodurch der wirtschaftliche als auch der technische Aufwand zur Realisierung des erfindungsgemäßen Verfahrens weiter reduziert wird.

Vorteilhaft weist das begrenzte OFDM-Sendesignal ein mit Filtermitteln geformtes und einer genormten Spektrumsmaske entsprechendes Spektrum auf - Anspruch 8. Spektrumsmasken können z.B. durch die ETSI vorgegeben sein - vgl. ETS 300 197.

Gemäß einer vorteilhaften Verwendung des erfindungsgemäßen Verfahrens in einer Punkt-zu-Mehrpunkt Kommunikationsanordnung wird jeder einen Mehrpunkt repräsentierenden, dezentralen Kommunikationseinrichtung im Sinne einer gleichzeitigen Informationsübermittlung von Kommunikationseinrichtungen jeweils eine Untergruppe zumindest einer Gruppe aller der für das Multiträgerverfahren verwendeten Trägerfrequenzen zugeordnet. Bei einem in der die Mehrpunkt-Komponente repräsentierenden, dezentralen Kommunikationseinrichtung angeordneten Sender werden die Verfahrensschritte a) bis d) für die zugewiesene Untergruppe der für das Multiträgerverfahren verwendeten Trägerfrequenzen durchgeführt. Bei einem in der die Punkt-Komponente repräsentierenden, zentralen Kommunikationseinrichtung angeordneten Empfänger werden aus den empfangenen OFDM-Sendesignalen gemäß der Schritte e) und f) die Schätz-Codewörter gebildet und für jede Untergruppe der für das Multiträgerverfahren verwendeten Trägerfrequenzen gemäß den Schritten b), c) und d) Mehrpunkt-spezifische, amplitudenbegrenzte OFDM-Signale gebildet und anschließend summiert. Aus dem Summensignal wird das weitere rekonstruierte, zeitdiskrete OFDM-Sendesignal gebildet - Anspruch 13. Durch diese vorteilhafte Bildung des OFDM-Sendesignals durch Aufsummierung nur eines Teils bzw. Untergruppe der für das Multiträgerverfahren verwendeten Trägerfrequenzen weist das gebildete OFDM-Sendesignal ein schmaleres Spektrum und folglich nur einen geringen Anteil von Außerbandstörungen im Spektralbereich auf. Vorteilhaft kann der Realisierungsaufwand von senderseitig angeordneten Filtereinheiten - z.B. Oberflächenwellenfilter (SAW) wie spectrum shaping filter - zur Reduzierung bzw. Beseitigung von Außerbandstörungen minimiert werden bzw. kann auf die Filtereinheiten verzichtet werden und somit drahtlose, hochbitratige Kommunikationsnetze besonders wirtschaftlich realisiert werden. Durch die Zuordnung jeweils einer Untergruppe der für das Multiträgerverfahren verwendeten Trägerfrequenzen zu den einzelnen dezentralen Kommunikationseinrichtungen wird auf Seite der Mehrpunkte ein FDMA-Vielfachzugriffsverfahren - Frequency Division Multiple Access - realisiert, wodurch eine parallele Übermittlung von Informationen, d.h. eine zeitlich parallele Datenübertragung von den dezentralen Kommunikationseinrichtungen zu der zentralen Kommunikationseinrichtung realisiert wird.

Durch eine vorteilhafte Weiterbildung der Verwendung des erfindungsgemäßen Verfahrens in einer Punkt-zu-Mehrpunkt Kommunikationseinordnung - Anspruch 15 - werden von der zentralen Kommunikationseinrichtung an die dezentralen Kommunikationseinrichtungen zu übermittelnde Informationen mit Hilfe des FDMA-Vielfachzugriffsverfahrens übermittelt.

Weitere vorteilhafte Ausgestaltungen des erfindungsgemäßen Verfahrens sind den weiteren Ansprüchen zu entnehmen.

Im folgenden wird das erfindungsgemäße Verfahren an Hand von drei Zeichnungen näher erläutert. Dabei zeigen:
- FIG 1: eine ein OFDM-Übertragungsverfahren realisierende Sendeeinheit,
- FIG 2: eine das erfindungsgemäße Verfahren realisierende Empfangseinheit, und
- FIG 3: eine beispielhafte Darstellung von während eines Ablaufs des erfindungsgemäßen Verfahrens erzeugten zeitdiskreten Codewörtern bzw. Schätz-Codewörtern und entsprechenden, frequenzdiskreten Sendesymbolen.

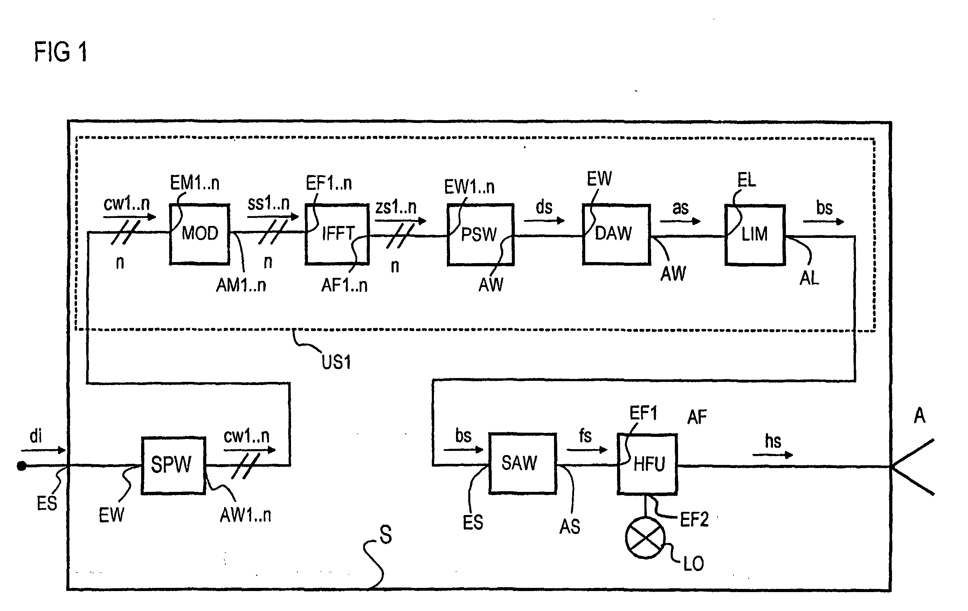

FIG 1 zeigt in einem Blockschaltbild eine einen Eingang ES aufweisende Sendeeinheit S, welche beispielsweise modularer Bestandteil von Sende- und Empfangsanlagen - nicht dargestellt - in drahtlose Kommunikationsnetze realisierenden Basisstationen oder Netzabschlußeinheiten sein kann. An den Eingang ES der Sendeeinheit S ist ein die zu übermittelnden Informationen repräsentierender digitaler, serieller Datenstrom di geführt. An den Eingang ES der Sendeeinheit S ist über einen Eingang EW ein Seriell/Parallel-Wandler SPW angeschlossen, welcher über n Ausgänge AW1...n und n Verbindungsleitungen mit n Eingängen EM1...n eines Modulators MOD verbunden ist. Der Modulator MOD ist über n Ausgänge AM1...n und n Verbindungsleitungen mit entsprechenden Eingängen EF1...n einer Transformationseinheit IFFT zur Durchführung einer Inversen, Diskreten "Fast Fourier-Transformation" verbunden. Die Transformationseinheit IFFT kann beispielsweise durch einen die "Fast Fourier-Transformation" durchführenden, integrierten Schaltkreis oder durch einen entsprechend ausgestalteten ASIC realisiert sein. Über n Ausgänge AF1...n ist die Transformationseinheit IFFT an n Eingänge EW1...n eines Parallel/Seriell-Wandlers PSW angeschlossen, welcher über einen Ausgang AW mit einem Eingang EW eines Digital/Analog-Wandlers DAW verbunden ist. Ein Ausgang AW des Digital/Analog-Wandlers DAW ist über eine Verbindungsleitung an einen Eingang EL eines die Hüllkurve eines eingehenden Sendesignals begrenzenden Begrenzers LIM angeschlossen, welcher beispielsweise durch einen Zwischenfrequenz-Verstärker mit nichtlinearer Kennlinie realisierbar ist. Die Funktionen des Begrenzers LIM können alternativ im Digital/Analog-Wandler DAW integriert sein, wobei die Begrenzerfunktionen durch einen Mikroprozessor-gesteuerten Prozeß oder durch Auswertung einer gespeicherten Lookup-Tabelle realisiert ist. Über einen Ausgang AL ist der Begrenzer LIM mit einen Eingang ES einer Filtereinheit SAW - beispielsweise ein ein Spectrum Shaping Filter realisierendes Oberflächenwellenfilter - verbunden. Die Filtereinheit SAW ist über einen Ausgang AS mit einem ersten Eingang EF1 einer Hochfrequenz-Umsetzereinheit HFU verbunden, an welche über einen zweiten Eingang EF2 ein lokaler Oszillator LO angeschlossen ist. In der Hochfrequenz-Umsetzereinheit HFU ist beispielsweise ein GaAs MMIC zur Verstärkung des am ersten Eingang EF1 anliegenden OFDM-Sendesignals angeordnet Die Hochfrequenz-Umsetzereinheit HFU ist über einen Ausgang AF mit einer außen an der Sendeeinrichtung S angebrachten Antenne A verbunden.

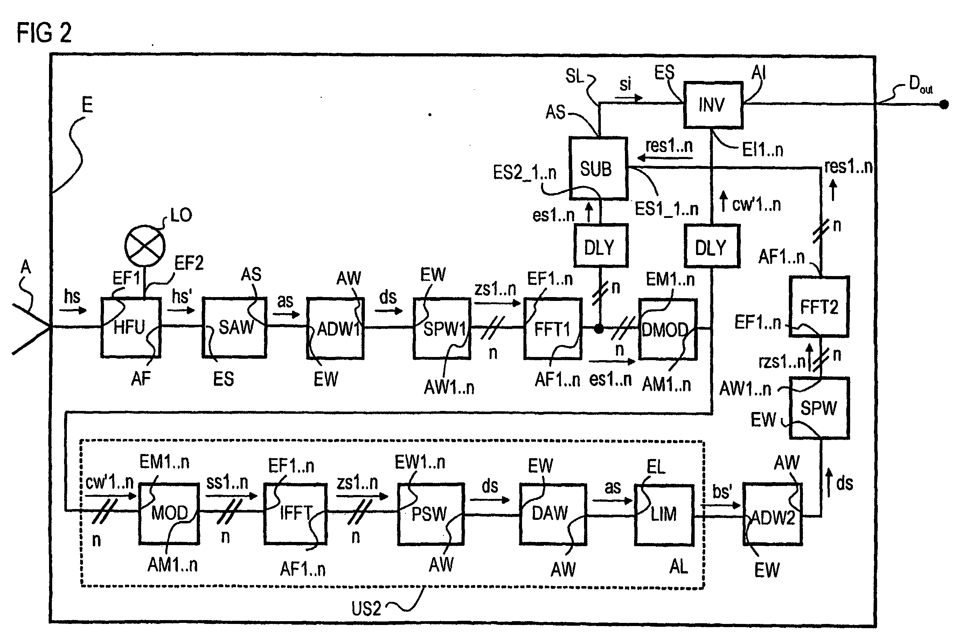

FIG 2 zeigt in einem Blockschaltbild eine eine Empfangsantenne A aufweisende Empfangseinheit E, welche ebenfalls modularer Bestandteil von Sende- und Empfangsanlagen - nicht dargestellt - in drahtlose Kommunikationsnetze realisierenden Basisstationen oder Netzabschlußeinheiten sein kann. An der außen an der Empfangseinheit E angebrachten Empfangsantenne A ist über einen ersten Eingang EF1 eine Hochfrequenz-Umsetzereinheit HFU angeschlossen, an welche über einen zweiten Eingang EF2 ein lokaler Oszillator LO angeschlossen ist. Über einen Ausgang AF ist die Hochfrequenz-Umsetzereinheit HFU mit einem Eingang ES einer ein Spektrum Shaping Filter realisierenden Filtereinheit SAW verbunden, welche über einen Ausgang AS mit einem Eingang EW eines ersten Analog/Digital-Wandlers ADW1 verbunden ist. Über einen Ausgang AW ist der erste Analog/Digital-Wandler ADW1 an einem Eingang EW eines ersten Seriell/Parallel-Wandlers SPW1 angeschlossen, welcher über n Ausgänge AW1...n und n Verbindungsleitungen mit den entsprechenden Eingängen EF1...n einer ersten Transformationseinheit FFT1 zur Realisierung einer Diskreten "Fast Fourier-Transformation" verbunden ist. Die erste Transformationseinheit FFT1 ist über n Ausgänge AF1...n mit entsprechenden Eingängen EM1...n eines Demodulators bzw. Entscheiders DMOD verbunden. Der Demodulator DMOD ist über n Ausgänge AM1...n an entsprechende Eingänge EM1...n eines Modulators MOD angeschlossen, welcher über n Ausgänge AM1...n mit entsprechenden Eingängen EF1...n einer Transformationseinheit IFFT zur Realisierung einer Diskreten, Inversen "Fast Fourier-Transformation" verbunden ist. Die Transformationseinheit IFFT weist mehrere Ausgänge AF1...n auf, an welche über mehrere Eingänge EW1...n ein Parallel/Seriell-Wandler PSW angeschlossen ist. Der Parallel/Seriell-Wandler PSW ist über einen Ausgang AW mit einem Eingang EW eines Digital/Analog-Wandlers DAW verbunden welcher über einen Ausgang AW mit einem Eingang EL eines Begrenzers LIM verbunden ist. An einen Ausgang AL des Begrenzers LIM ist ein Eingang EW eines zweiten Analog/Digital-Wandlers ADW2 geführt, welcher über einen Ausgang AW an einen Eingang EW eines zweiten Seriell/Parallel-Wandler SPW2 angeschlossen ist. Der zweite Seriell/Parallel-Wandler SPW2 weist n Ausgänge AW1...n auf, welche über entsprechende Verbindungsleitungen mit entsprechenden Eingängen EF1...n einer zweiten Transformationseinheit FFT2 zur Realisierung einer Diskreten "Fast Fourier-Transformation" verbunden sind. Über n Ausgänge AF1...n ist die zweite Transformationseinheit FFT2 mit entsprechenden ersten Eingängen ES1_1...n einer Subtraktionseinheit SUB verbunden. Die Subtraktionseinheit weist weitere zweite Eingänge ES2_1...n auf, an welche über ein Verzögerungsglied DLY die entsprechenden Ausgängen AF1...n der ersten Transformationseinheit FFT1 angeschlossen sind. Die Subtraktionseinheit SUB ist über einen Ausgang AS und über eine Steuerleitung SL mit einem Eingang ES einer Invertiereinheit INV verbunden. Die Invertiereinheit INV ist zusätzlich über n-Eingänge EI1...n und über ein Verzögerungsglied DLY an die entsprechenden n-Ausgängen AM1...n des Demodulators DMOD angeschlossen. Des Weiteren weist die Invertiereinheit INV einen Ausgang AI auf, welcher mit einem Ausgang Dₒᵤₜ der Empfangseinheit E verbunden ist.

Um einen ordnungsgemäßen Verlauf des erfindungsgemäßen Verfahrens zu gewährleisten, weisen die sowohl in der Sendeeinrichtung S als auch in der Empfangseinrichtung E angeordneten und jeweils durch ein gestricheltes Rechteck markierten Einheiten - Modulator MOD, Transformationseinheit IFFT, Parallel/Seriell-Wandler PSW, Digital/Analog-Wandler DAW und Begrenzer LIM - die gleichen Schaltungs- bzw. Parametereigenschaften auf, so daß die jeweils durch die gestrichelten Rechtecke dargestellten Übertragungsstrecken US1,2 exakt die selben Übertragungseigenschaften aufweisen.

Im folgenden wird das erfindungsgemäße Verfahren näher erläutert:

Gemäß dem Ausführungsbeispiel nach FIG 1 ist an den Eingang ES der Sendeeinheit S ein die zu übermittelnden Informationen repräsentierender, digitaler, serieller Datenstrom di herangeführt. Durch den Seriell/Parallel-Wandler SPW wird zum Zeitpunkt i der zu übermittelnde, serielle Datenstrom di in n Subträger-konforme Datenströme, d.h. in n Codewörter cw1...n, bzw. cw(i)1...n der Wortbreite k-Bit parallelisiert, wobei an die Ausgänge AW1...n des Seriell/Parallel-Wandlers SPW jeweils ein Codewort cw1...n geführt ist. In diesem Ausführungsbeispiel wird ein mit Hilfe des Multiträger- bzw. OFDM-Übertragungsverfahren gebildetes OFDM-Sendesignal durch additive Überlagerung von n = 256 orthogonalen Subträgern sb1...n erzeugt, wobei die orthogonalen Subträger sb1...n einzeln moduliert und zu einem Summensignal bzw. zu dem OFDM-Sendesignal zs1...n,ds,as zusammengefaßt werden. Die Frequenzen der orthogonalen Subträger sb1...n weisen dabei ganzzahlige Vielfache des reziproken Wertes einer auswertbaren Blocklänge T' auf.

Um eine einfache Erläuterung des erfindungsgemäßen Verfahrens zu ermöglichen, weisen in diesem Ausführungsbeispiel die n Codewörter cw1...n jeweils eine Wortbreite von 1 Bit auf. Die gebildeten Codewörter cw1...n werden durch den Modulator MOD in entsprechende frequenzdiskrete Modulationssymbole ss1...n konvertiert, welche im folgenden auch als Sendesymbole ss1...n bezeichnet werden. Dabei werden in diesem Ausführungsbeispiel die an die Eingänge EM1...n des Modulators MOD herangeführten Codewörter cw1...n mit Hilfe eines im Modulator MOD realisierten BPSK-Modulationsverfahren - Binary Phase Shift Keying - in die entsprechenden frequenzdiskreten Sendesymbole ss1...n konvertiert - üblicherweise durch komplexe Zahlen dargestellt - und an die entsprechenden Eingänge EF1...n der das OFDM-Übertragungsverfahren realisierenden Transformationseinheit IFFT weitergeleitet. Durch Berechnung einer in der Transformationseinheit IFFT realisierten, Diskreten, Inversen "Fast Fourier-Transformation" werden aus den frequenzdiskreten Sendesymbolen ss1...n zeitdiskrete Abtastwerte zs1...n - welche das aus der inversen Fourier-Transformation hervorgehende OFDM-Sendesignal im Zeitbereich repräsentieren - gebildet, wobei jeweils ein Abtastwert zs1...n an einen Ausgang AF1...n der Transformationseinheit IFFT geführt ist. Durch den Parallel/Seriell-Wandler PSW wird aus den berechneten, zeitdiskreten Abtastwerten zs1...n ein serielles, zeitdiskretes OFDM-Sendesignal ds erzeugt, welches durch eine anschließende Digital/Analog-Wandlung in ein analoges OFDM-Sendesignal as umgewandelt wird. Durch den Begrenzer LIM werden die Amplituden des analoge Sendesignals as auf einen vorgebbaren Wert verstärkt, bzw. begrenzt, wobei im analogen Sendesignal as enthaltene Amplitudenschwankungen minimiert und somit der Crestfaktor - Verhältnis von Spitzenleistung zu mittlerer Leistung - des analogen Sendesignals as minimiert bzw. verbessert wird. Die bei der Begrenzung des analogen Sendesignals as durch den Begrenzer LIM hervorgerufenen Außerbandstörungen im Sendespektrum des begrenzten, analogen OFDM-Sendesignals bs werden durch eine anschließende Filterung des begrenzten Signals bs durch die Filtereinheit SAW entfernt, so daß für drahtlose Kommunikationsnetze bzw. für Mobilfunksysteme definierte Spektrumsmasken - beispielsweise durch eine ETSI-Normierung vorgegeben - eingehalten werden. Die Hüllkurve des gefilterten OFDM-Sendesignals fs weist nach der Filterung nur noch kleine Amplitudenschwankungen auf, so daß ein in der Hochfrequenz-Umsetzereinheit HFU angeordneter Sendeverstärker - beispielsweise ein nur eine begrenzte Sendeleistung aufweisender GaAs-MMIC, nicht dargestellt - mit sehr kleinen zusätzlichen Backoff betrieben werden kann ohne daß die aus dem begrenzten OFDM-Sendesignal bs entfernten bzw. herausgefilterten Außerbandstörungen wieder erzeugt werden. Das verstärkte und in das Hochfrequenzband bzw. RF-Band gemischte OFDM-Sendesignal hs wird über die Antenne A an die im Sendebereich der Sendeeinheit S angeordneten Netzabschlußeinheiten über das drahtlose Übertragungsmedium "Funkkanal" gesendet.

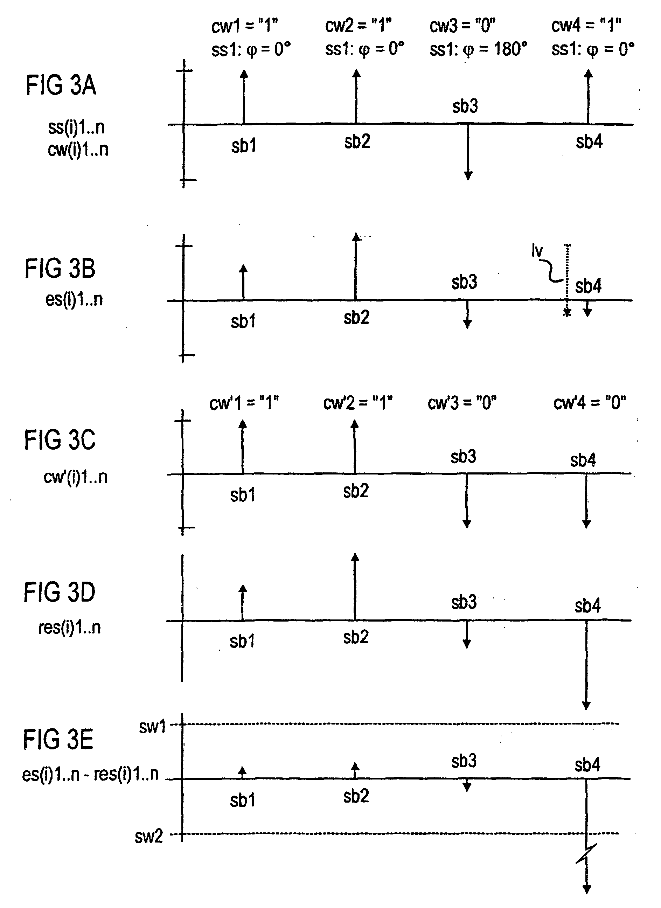

In FIG 3A sind beispielhaft die ersten vier der zum Zeitpunkt i durch den Modulator MOD gebildeten Sendesymbole ss(i)1...n dargestellt, wobei jeweils ein Sendesymbol ss1...4 einem Subträger sb1...4 des durch das mit Hilfe der Inversen, Diskreten "Fast Fourier-Transformation" realisierten OFDM-Übertragungsverfahrens gebildeten Sendesignals zs1...n,as,ds,fs,hs zugeordnet ist. Bedingt durch die Eigenschaften des im Modulator MOD realisierten BPSK-Modulationsverfahren wird die Phasenlage der einzelnen Subträger sb1...n, bzw. deren unmodulierte Trägersignale abhängig vom zugeordneten Codewort cw(i)1...n zwischen zwei 180°-verschobenen Phasenzustände geändert, wobei die Amplitude der einzelnen Subträger sb1...n unverändert bleibt. Beispielsweise ist gemäß FIG 3A zum Zeitpunkt i dem ersten Subträger sb1 das erste Codewort cw1(i)="1" zugeordnet, d.h. der erste Subträger sb1 weist eine Phase von ϕ = 0° auf. Dem zweiten Subträger sb2 ist zum Zeitpunkt i das zweite Codewort cw2(i)="1" zugeordnet, d.h. der zweite Subträger sb2 weist zum Zeitpunkt i die Phase ϕ = 0° auf. Dem dritten Subträger sb3 ist das dritte Codewort cw3(i) = "0" zugeordnet, d.h. der dritte Subträger sb3 weist eine Phase von ϕ = 180° auf. Dem vierten Subträger sb4 ist zum Zeitpunkt i das vierte Codewort cw4(i)="1" zugeordnet, d.h. zum Zeitpunkt i weist der vierte Subträger sb4 eine Phase von ϕ = 0° auf.

Bei der Begrenzung des gebildeten analogen OFDM-Sendesignals as durch den Begrenzer LIM werden neben den Außerbandstörungen auch nicht lineare Verzerrungen zwischen den einzelnen Subträgern sb1...n, d.h. ein mehr oder weniger starkes Übersprechen zwischen den einzelnen Subträgern sb1...n verursacht, welches zusammen mit dem durch die Übertragungseigenschaften des Übertragungsmediums "Funkkanal" verursachten Rauschen zusätzliche Bitfehler bei der Übertragung der zu übermittelnden digitalen Informationen di hervorruft.

Das in der Sendeeinheit S erzeugte, über die Antenne A und das drahtlose Übertragungsmedium "Funkkanal" ausgesendete, hochfrequente OFDM-Sendesignal hs wird gemäß FIG 2 über eine außen an der Empfangseinheit E angeordnete Empfangsantenne A empfangen und an den ersten Eingang EF1 der Hochfrequenz-Umsetzereinheit HFU zugeführt. Das empfangene OFDM-Sendesignal hs wird durch die Hochfrequenz-Umsetzereinheit HFU in das Zwischenfrequenzband heruntergemischt und durch die anschließende spektrale Formfilterung durch die Filtereinheit SAW die durch das drahtlose Übertragungsmedium "Funkkanal" verursachten Störungen von Nachbarkanälen - beispielsweise von benachbarten Sendeeinheiten verursachte Störungen - unterdrückt. Das gefilterte OFDM-Sendesignal as wird durch den Analog/Digital-Wandler ADW analog/digital-gewandelt und anschließend durch den ersten Seriell/Parallel-Wandler SPW1 in entsprechende, das digitale OFDM-Sendesignal ds repräsentierende, n zeitdiskrete Abtastwerte zs1...n parallelisiert. Mit Hilfe der in der ersten Transformationseinheit FFT1 realisierten diskreten "Fast Fourier-Transformation" werden aus den n zeitdiskreten Abtastwerten zs1...n die entsprechenden n Empfangssymbole es1...n berechnet, welche anschließend durch den Demodulator DMOD in die entsprechenden demodulierten Empfangs-Codewörter cw'1...n konvertiert werden. Die Demodulation erfolgt in der Art und Weise, daß durch im Demodulator angeordnete Entscheider-Funktionen aus den an den Ausgängen AF1...n der ersten Transformationseinheit FFT1 anliegenden Empfangssymbolen es1...n die Empfangscodewörter cw'1...n bestimmt werden. In FIG 3B sind beispielsweise die zum Zeitpunkt i mit Hilfe der ersten vier modulierten Subträger sb1...4 übermittelten und in der Empfangseinheit E berechneten Empfangssymbole es1...4 dargestellt. Zusätzlich zu den durch die Übertragungseigenschaften des Übertragungsmediums "Funkkanal" verursachten nicht linearen Verzerrungen - d.h. Rauschen - sind durch die senderseitige Begrenzung des analogen OFDM-Sendesignals as durch den Begrenzer LIM und durch die dadurch verursachten linearen Verzerrungen und das Übersprechen einzelner Subträger sb1...4 die Amplitudeninformationen der ursprünglich gebildeten Sendesymbole ss1...4 - vgl. FIG 3A - verändert worden. Zudem ist durch die linearen Verzerrungen die Phaseninformation des vierten Sendesymbols ss4 um den Wert Δϕ = 180° verfälscht worden - beispielsweise ist die Amplituden- und Phasenverfälschung des vierten Sendesymbols ss4 bzw. Empfangssymbols es4 durch einen punktierten Pfeil lv dargestellt.

Im folgenden werden die demodulierten Empfangs-Codewörter cw'1...n auch als Schätz-Codewörter cw'1...n bezeichnet, wobei in FIG 3C beispielsweise die ersten vier aus den entsprechenden Empfangssymbolen es1...4 bestimmten Schätz-Codewörter cw'1...4 dargestellt sind. Im Vergleich zu FIG 3A, in denen die ursprünglich gebildeten ersten vier Codewörter cw1...4 dargestellt sind, ist die fehlerfreie Übermittlung der mit Hilfe der ersten 3 Subträger sb1...3 übermittelten Codewörter cw1...3 ersichtlich, d.h. cw1=cw'1, cw2=cw'2 und cw3=cw'3. Das mit Hilfe des vierten Subträgers sb4 übermittelte vierte Codewort cw4 wurde jedoch durch die nichtlinearen Verzerrungen sowie durch das Funkkanal-spezifische Rauschen lv und die dadurch hervorgerufene Verfälschung der Phaseninformation des vierten Sendesymbols ss4 um Δϕ = 180° fehldetektiert, d.h. das ursprünglich ausgesendete vierte Codewort cw4 = "1" ist durch eine Fehldetektion auf den falschen Wert CW'4 = "0" "geschätzt" worden.

Gemäß dem erfindungsgemäßen Verfahren wird mit Hilfe der bestimmten Schätz-Codewörter cw'1...n das in der Sendeeinheit S erzeugte und begrenzte OFDM-Sendesignal bs mit Hilfe der in der Empfangseinheit E angeordneten Übertragungsstrecke US2, welche die gleichen Übertragungseigenschaften wie die in der Sendeeinheit S angeordnete Übertragungsstrecke bsl aufweist, rekonstruiert. Dazu werden die ermittelten Schätz-Codewörter cw'1...n an die n Eingänge der die Anordnung von Modulator MOD, Transformationseinrichtung IFFT, Parallel/Seriell-Wandler PSW, Digital/Analog-Wandler DAW und Begrenzer LIM repräsentierenden Übertragungsstrecke US2 geführt. Das daraus resultierende, d.h. das und an den Ausgang AL der Übertragungsstrecke US2 geleitete, rekonstruierte OFDM-Sendesignal bs' wird anschließend analog/digital-gewandelt und durch den zweiten Seriell/Parallel-Wandler SPW2 in entsprechende, zeitdiskrete Abtastwerte rzs1...n parallelisiert. Die zeitdiskreten Abtastwerte rzs1...n werden mit Hilfe der Diskreten "Fast Fourier-Transformation" in die entsprechenden rekonstruierten Empfangssymbole res1...n konvertiert, wobei in FIG 3D beispielhaft die ersten 4 zum Zeitpunkt (i) rekonstruierten Empfangssymbole res1...n dargestellt sind. Im Vergleich mit FIG 3B sind die ersten drei rekonstruierten Empfangssymbole res1...3 mit den ersten drei ursprünglich in der Sendeeinheit S gebildeten Sendesymbolen ss1...3 sowohl in der Amplituden- als auch bei der Phaseninformation identisch. Dagegen weist das rekonstruierte vierte Empfangssymbol res4 sowohl eine Phasen- als auch eine starke Amplitudenabweichung auf. Durch Subtraktion der an den Ausgängen AF1...n der ersten Transformationseinheit FFT1 anliegenden Empfangssymbole es1...n von den rekonstruierten, frequenzdiskreten Empfangssymbolen res1...n können erfindungsgemäß die bei der Übertragung des zu übermittelnden, seriellen Datenstromes di auftretenden Übertragungsfehler bzw. Bitfehler erkannt werden. In FIG 3E ist beispielsweise die Differenz der ersten vier Empfangssymbole es1...4 von den entsprechenden rekonstruierten Empfangssymbolen res1...4 dargestellt. Da die ersten drei Empfangssymbole es1...3 durch den Demodulator DMOD fehlerfrei demoduliert bzw. richtig geschätzt und somit richtige Schätz-Codewörter cw'1...3 gebildet wurden, weisen die in FIG 3E dargestellten Differenzen zwischen den ersten drei Empfangssymbolen es1...3 und den entsprechenden rekonstruierten Empfangssymbolen res1...3 nur kleine Werte auf, welche die durch das Übertragungsmedium "Funkkanal" verursachten Rauschkomponenten repräsentieren. Da das empfangene vierte Empfangssymbol es4 durch den Demodulator DMOD falsch demoduliert, bzw. bestimmt, d.h. ein falsches viertes Schätz-Codewort cw'4 gebildet und daraus folglich ein falsches viertes Empfangssymbol res4 rekonstruiert wurde, weist die Differenz zwischen dem vierten Empfangssymbol es4 und dem vierten rekonstruierten Empfangssymbol res4 einen großen Wert auf. Durch Einfügen von vorgebbaren Schwellwerten sw1,2 werden fehlerhaft rekonstruierte Empfangssymbole res4 - durch Überschreiten der vorgegebenen Schwellwerte sw1,2 - in der Subtraktionseinheit SUB erkannt, ein entsprechendes Steuersignal si in der Subtraktionseinheit SUB gebildet und an die Invertiereinheit INV weitergegeben. In Abhängigkeit vom eingehenden Steuersignal si wird das am entsprechenden Eingang EI4 der Invertiereinheit INV anliegende, fehlerhaft übertragene vierte Schätz-Codewort cw'4 invertiert und die somit fehlerbereinigten Schätz-Codewörter cw'1...n an den Ausgang Dₒᵤₜ der Empfangseinrichtung E zur weiteren Bearbeitung - z.B. zur digital/analog-Wandlung - weitergeleitet.

Gemäß einer vorteilhaften, nicht dargestellten Verwendung des erfindungsgemäßen Verfahrens in einer Punkt-zu-Mehrpunkt Kommunikationsanordnung ist jeweils eine Untergruppe zumindest einer Gruppe aller für das Multiträgerverfahren verwendeten Trägerfrequenzen, bzw. Subträger - z.B. n = 256 - einer einen Mehrpunkt repräsentierenden, dezentralen Kommunikationseinrichtung zugeordnet. Beispielsweise wird einer ersten dezentralen Kommunikationseinrichtung eine erste die ersten zehn für das Multiträgerverfahren verwendeten Trägerfrequenzen f1...10 repräsentierende Untergruppe zugeordnet. In diesem Sinne wird einer zweiten dezentralen Kommunikationseinrichtung eine zweite die folgenden 10 Trägerfrequenzen f11...20 repräsentierende Untergruppe und jeder weiteren dezentralen Kommunikationseinrichtung eine weitere die entsprechenden Trägerfrequenzen repräsentierende Untergruppe zugeordnet. Beispielsweise sind gemäß der erfindungsgemäßen Verwendung die ersten hundert Subträger bzw. Trägerfrequenzen f1...100 in 10 Untergruppen mit jeweils 10 Trägerfrequenzen unterteilt, wobei zehn in der Punkt-zu-Mehrpunkt Kommunikationsanordnung angeordneten dezentralen Kommunikationseinrichtungen jeweils eine Untergruppe zugeordnet ist. Durch diese vorteilhafte Verwendung ist ein paralleler Betrieb der dezentralen Kommunikationseinrichtungen realisierbar, d.h. die von den dezentralen Kommunikationseinrichtungen an die die Punkt-Komponente repräsentierende, zentrale Kommunikationseinrichtung zu übermittelnden Informationen werden mit Hilfe des FDMA-Vielfachzugriffsverfahrens - Frequency Division Multiple Access - zeitlich parallel über das Übertragungsmedium "Funkkanal" übermittelt. Die restlichen noch zur Verfügung stehenden Subträger sb101...256 bzw. Trägerfrequenzen f101...256 werden beispielsweise gemäß dem bereits beschriebenen Verfahren nach Anspruch 1 genutzt, wobei die von den dezentralen Kommunikationseinrichtungen an die die zentrale Kommunikationseinrichtung zu übermittelnden Informationen mit Hilfe des TDMA-Vielfachzugriffsverfahrens - Time Division Multiple Access - übermittelt werden.

In den Sendeanlagen der in der Kommunikationsanordnung angeordneten, dezentralen Kommunikationseinrichtungen ist jeweils eine bereits erläuterte und in FIG 1 dargestellte Sendeeinheit S angeordnet. Da von jeder dezentralen Kommunikationseinrichtung nur die Trägerfrequenzen der jeweils zugeordneten Untergruppe genutzt werden, sind die beschriebenen Vorgänge - Bildung von Codewörtern und frequenzdiskreten Sendesymbolen usw. - an die begrenzte Anzahl von Trägerfrequenzen bzw. orthogonalen Subträgern angepaßt. Beispielsweise sind nur an die ersten 10 Eingänge EF1...10 der Transfomationseinheit IFFT jeweils ein frequenzdiskretes Sendesymbol ss1...10 geführt. An die restlichen Eingänge EF11...256 der Transfomationseinheit IFFT ist eine die Nichtbenutzung der orthogonalen Träger sb11...256 anzeigende Information, z.b. der Wert "0" geführt. Bei einer Verwendung des erfindungsgemäßen Verfahrens in der Punkt-zu-Mehrpunkt Kommunikationsanordnung muß die in der Empfangseinheit E der zentralen Kommunikationseinrichtung angeordnete Übertragungsstrecke US2 - vgl. FIG 2 - für jede Untergruppe der für das Multiträgerverfahren verwendeten Trägerfrequenzen, bzw. Subträger realisiert sein, um die von den dezentralen Kommunikationseinrichtungen an die zentrale Kommunikationseinrichtung parallel übermittelten OFDM-Sendesignale gleichzeitig und entsprechend den jeweils zugeordneten Trägerfrequenzen zu rekonstruieren und anschließend aufzusummieren.

Durch das beschriebene Verfahren können kostengünstig zu realisierende Sendeverstärker, insbesondere nur eine begrenzte Sendeleistung aufweisende, nicht lineare Halbleiter-Verstärker wie beispielsweise GaAs-MMIC's unter optimaler Ausnutzung der zur Verfügung stehenden Verstärker-Sendeleistung in ein OFDM-Übertragungsverfahren realisierenden Sende- und Empfangsanlagen eingesetzt werden - nur ein Betrieb mit geringem Backoff erforderlich. Durch den dadurch ermöglichten Verzicht auf bisher in Sende- und Empfangsanlagen eingesetzte, kostenaufwendige Hohlleiterkomponenten können drahtlose Kommunikationsnetze mit geringstem technischen und wirtschaftlichen Aufwand realisiert werden. Desweiteren weist das durch Verwendung des erfindungsgemäßen Verfahres nach Anspruch 12 und 13 gebildete OFDM-Sendesignal durch die Aufsummierung nur der einer Untergruppe zugeordneten Subträger bzw. Trägerfrequenzen ein schmaleres Spektrum und folglich nur einen geringeren Anteil von Außerbandstörungen im Spektralbreich auf, wodurch senderseitige Filtereinheiten eingespart und somit der technischen und wirtschaftlichen Aufwand zur Realisierung drahtloser Kommunikationsnetze weiter reduziert wird.

## Patentansprüche

1. Verfahren zur Bestimmung von Übertragungsfehlern bei einem mit Hilfe eines Multiträgerverfahrens übermittelten, seriellen Datenstromes (di),
- bei dem in einem Sender (S),
a) der serielle Datenstrom (di) in k-Bit breite Codewörter (cw1...n) parallelisiert wird,
b) aus den gebildeten Codewörtern (cw1...n) mit Hilfe eines senderspezifischen Modulationsverfahrens entsprechende frequenzdiskrete Sendesymbole (ss1...n) gebildet werden,
c) die gebildeten, frequenzdiskreten Sendesymbole (ss1...n) mit Hilfe einer Inversen Diskreten Fourier-Transformation (IDFT) in ein zeitdiskretes OFDM-Sendesignal (zs1...n) konvertiert werden,
d) das gebildete zeitdiskrete OFDM-Sendesignal (zs1...n) amplitudenbegrenzt wird,
- bei dem in einem Empfänger (E)
e) aus dem empfangenen, zeitdiskreten OFDM-Sendesignal (zs1...n) mit Hilfe der Diskreten Fourier-Transformation (FFT1) im empfangenen OFDM-Sendesignal (hs) enthaltene, frequenzdiskrete Empfangssymbole (es1...n) bestimmt werden,
f) aus den bestimmten, frequenzdiskreten Empfangssymbolen (es1...n) durch ein Demodulationsverfahren (DMOD) k-Bit breite Schätz-Codewörter (cw'1...n) gebildet werden,
**dadurch gekennzeichnet, dass**
g) aus den gebildeten Schätz-Codewörtern (cw'1...n) äquivalent zu den Schritten b), c) und d) ein dem zeitdiskreten OFDM-Sendesignal entsprechendes OFDM-Signal (rzs1...n) rekonstruiert wird,
h) aus dem gebildeten, rekonstruierten, zeitdiskreten OFDM-Sendesignal (rzs1...n) mit Hilfe der Diskreten Fourier-Transformation (FFT2) frequenzdiskrete, rekonstruierte Empfangssymbole (res1...n) bestimmt werden,
i) die Differenz zwischen den bestimmten, frequenzdiskreten Empfangssymbolen (es1...n) und den bestimmten rekonstruierten Empfangssymbolen (res1...n) bestimmt wird,
j) in Abhängigkeit vom bestimmten Differenzergebnis Übertragungsfehler erkannt werden.

2. Verfahren nach Anspruch 1,
**dadurch gekennzeichnet,**
**daß** bei Erkennen eines Übertragungsfehlers eine Fehler-Behandlungsroutine ausgeführt wird.

3. Verfahren nach Anspruch 1 oder 2,
**dadurch gekennzeichnet,**
**daß** bei einer Überschreitung des Differnzwertes zwischen einem frequenzdiskreten Empfangssymbol (es1...n) und dem entsprechenden frequenzdiskreten, rekonstruierten Empfangssymbol (res1...n) über einen vorgebbaren Schwellenwert (sw1,2) ein Empfangssymbol-individueller Übertragungsfehler erkannt wird.

4. Verfahren nach Anspruch 3,
**dadurch gekennzeichnet,**
**daß** bei Erkennen eines Empfangssymbol-individuellen Übertragungsfehlers das fehlerhafte, frequenzdiskrete Empfangssymbol (es1...n) oder das daraus durch Demodulation gebildete k-Bit breite Schätz-Codewort (cw'1...n) entsprechend korrigiert wird.

5. Verfahren nach Anspruch 4,
**dadurch gekennzeichnet,**
**daß** bei Erkennen eines Empfangssymbol-individuellen Übertragungsfehlers das entsprechende k-Bit breite Schätz-Codewort (cw'1...n) invertiert wird.

6. Verfahren nach einem der vorherigen Ansprüche,
**dadurch gekennzeichnet,**
**daß** die Inverse Diskrete Fourier-Transformation durch eine Inverse "Fast Fourier-Transformation" (IFFT) und die Diskrete Fourier-Transformation durch eine "Fast Fourier-Transformation" (FFT1,2) realisiert ist.

7. Verfahren nach einem der vorherigen Ansprüche,
**dadurch gekennzeichnet,**
**daß** die Amplitude des zeitdiskreten OFDM-Sendesignals mit Hilfe eines Digital/Analog-Wandlers oder mit Hilfe eines Mikroprozessor-gesteuerten Prozesses oder durch Auswertung von speicherbaren Tabellen oder durch einen eine geeignete Kennlinie aufweisenden Zwischenfrequenz-Verstärker auf einen vorgebbaren Wert begrenzt wird.

8. Verfahren nach einem der vorherigen Ansprüche,
**dadurch gekennzeichnet,**
**daß** im Sender (S) das amplitudenbegrenzte OFDM-Sendesignal (bs) ein mit Hilfe von Filtermitteln (SAW) geformtes und einer genormten Spektrumsmaske entsprechendes Spektrum aufweist.

9. Verfahren nach einem der vorherigen Ansprüche,
**dadurch gekennzeichnet,**
**daß** das senderspezifische Modulationsverfahren (MOD) durch ein absolutes oder differentielles Modulationsverfahren realisiert ist.

10. Verfahren nach Anspruch 9,
**dadurch gekennzeichnet,**
**daß** das differentielle Modulationsverfahren (MOD) durch eine differentielle Modulation der Phase - Differential Phase Shift Keying - oder durch eine differentielle Modulation der Amplitude und der Phase - Differential Amplitude Phase Shift Keying - realisiert ist.

11. Verfahren nach einem der vorherigen Ansprüche,
**dadurch gekennzeichnet,**
**daß** mit Hilfe des bestimmten Differenzergebnisses Eigenschaften des Übertragungskanals erkannt werden.

12. Verfahren nach einem der vorherigen Ansprüche,
**dadurch gekennzeichnet,**
- **daß** im Sender (S) das gebildete OFDM-Sendesignal (bs, fs) in ein hochfrequentes OFDM-Sendesignal (hs) konvertiert wird, und
- **daß** im Empfänger (E) das empfangene, hochfrequente OFDM-Sendesignal (hs) wieder in ein OFDM-Signal (hs') konvertiert wird.

13. Verfahren nach einem der vorherigen Ansprüche,
**dadurch gekennzeichnet,**
**daß** das OFDM-Sendesignal (bs, fs) durch einen einen nichtlinearen Verstärker repräsentierenden GaAs MMIC-Verstärker - Monolitic Microwave Integrated Circuits - verstärkt wird.

14. Verfahren nach einem der vorherigen Ansprüche,
**dadurch gekennzeichnet,**
- **daß** bei einer Punkt-zu-Mehrpunkt Kommunikationsanordnung jeder einen Mehrpunkt repräsentierenden, dezentralen Kommunikationseinrichtung im Sinne einer gleichzeitigen Informationsübermittlung von Kommunikationseinrichtungen jeweils eine Untergruppe zumindest einer Gruppe aller der für das Multiträgerverfahren verwendeten Trägerfrequenzen zugeordnet wird, und
- **daß** bei einem in der die Mehrpunkt-Komponente repräsentierenden, dezentralen Kommunikationseinrichtung angeordneten Sender (S) die Verfahrensschritte a) bis d) gemäß Anspruch 1 für die zugewiesene Untergruppe der für das Multiträgerverfahren verwendeten Trägerfrequenzen durchgeführt werden,
- **daß** bei einem in der die Punkt-Komponente repräsentierenden zentralen Kommunikationseinrichtung angeordneten Empfänger (E)
- - aus den empfangenen OFDM-Sendesignalen (hs) gemäß den im Anspruch 1 angegebenen Schritte e) und f) die Schätz-Codewörter (cw'1...n) gebildet werden,
- - für jede Untergruppe der für das Multiträgerverfahren verwendeten Trägerfrequenzen gemäß den in Anspruch 1 angegebenen Schritten b), c) und d) Mehrpunkt-spezifische, amplitudenbegrenzte OFDM-Signale (bs') gebildet und anschließend summiert werden, und
- - aus dem Summensignal das weitere rekonstruierte, zeitdiskrete OFDM-Sendesignal (rzs1...n) gebildet wird.

15. Verfahren nach Anspruch 14,
**dadurch gekennzeichnet,**
- **daß** in einem in der Punkt-Komponente angeordneten Sender (S) bei einem an einen Mehrpunkt zu übermittelnde Datenstrom (di) die Verfahrensschritte a) bis d) gemäß Anspruch 1 für die zugewiesene Untergruppe der für das Multiträgerverfahren verwendeten Trägerfrequenzen durchgeführt werden,
- **daß** in einem im Mehrpunkt angeordneten Empfänger (E) bei dem empfangenen OFDM-Sendesignal (hs, bs) die Verfahrensschritte e) bis i) gemäß Anspruch 1 für die zugewiesene Untergruppe der für das Multiträgerverfahren verwendeten Trägerfrequenzen durchgeführt werden.

## Claims

1. Method for detecting transmission errors in a serial data stream (di) transmitted using a multicarrier method,
- with which in a transmitter (S)
a) the serial data stream (di) is parallelized into k-bit long code words (cw1 ... n),
b) corresponding frequency-discrete transmission symbols (ss1 ... n) are created from the created code words (cw1 ... n) using a transmitter-specific modulation method,
c) the frequency-discrete transmission symbols (ss1 ... n) created are converted to a time-discrete OFDM transmission signal (zs1 ... n) using an inverse discrete Fourier transformation (IDFT),
d) the time-discrete OFDM transmission signal (zs1 ... n) created is amplitude limited,
- with which in a receiver (E)
e) frequency-discrete receiver symbols (es1 ... n) contained in the received OFDM transmission signal (hs) are determined from the received time-discrete OFDM transmission signal (zs1 ... n) using the discrete Fourier transformation (FFT1),
f) k-bit long estimated code words (cw'1 ... n) are created from the thus determined frequency-discrete receiver symbols (es1 ... n) by means of a demodulation method (DMOD),
**characterized in that**
g) an OFDM signal (rzs1 ... n) corresponding to the time-discrete OFDM transmission signal is reconstructed from the estimated code words created (cw'1 ... n) equivalent to the stages b), c) and d),
h) frequency-discrete reconstructed receiver symbols (res1 ... n) are determined from the reconstructed, time-discrete OFDM transmission signal created (rzs1 ... n) using the discrete Fourier transformation (FFT2),
i) the difference is determined between the frequency-discrete receiver symbols (es1 ... n) determined and the reconstructed receiver symbols (res1 ... n) determined.
j) transmission errors are detected as a function of the difference determined.

2. Method according to Claim 1,
**characterized in that**
an error management routine is implemented when a transmission error is detected.

3. Method according to Claim 1 or 2,
**characterized in that**
when the difference between a frequency-discrete receiver symbol (es1 ... n) and the corresponding frequency-discrete, reconstructed receiver symbol (res1 ... n) exceeds a predefinable threshold value (sw1, 2) a receiver-symbol-specific transmission error is detected.

4. Method according to Claim 3,
**characterized in that**
when a receiver-symbol-specific transmission error is detected, the incorrect, frequency-discrete received symbol (es1 ... n) or the k-bit long estimated code word (cw'1 ... n) created from it by demodulation is corrected correspondingly.

5. Method according to Claim 4,
**characterized in that**
when a receiver-symbol-specific transmission error is detected, the corresponding k-bit long estimated code word (cw'1 ... n) is inverted.

6. Method according to one of the preceding Claims,
**characterized in that**
the inverse discrete Fourier transformation is implemented by means of an inverse fast Fourier transformation (IFFT) and the discrete Fourier transformation by means of a fast Fourier transformation (FFT1, 2).

7. Method according to one of the preceding Claims,
**characterized in that**
the amplitude of the time-discrete OFDM transmission signal is limited to a predefinable value using a digital/analog converter or using a microprocessor-controlled process or by analyzing storable tables or by means of an intermediate frequency amplifier with suitable characteristics.

8. Method according to one of the preceding Claims,
**characterized in that**
in the transmitter (S) the amplitude-limited OFDM transmission signal (bs) has a spectrum formed using filtering means (SAW) and corresponding to a standard spectrum mask.

9. Method according to one of the preceding Claims,
**characterized in that**
the transmitter-specific modulation method (MOD) is implemented by means of an absolute or differential modulation method.

10. Method according to Claim 9,
**characterized in that**
the differential modulation method (MOD) is implemented by means of differential phase shift keying or differential amplitude phase shift keying.

11. Method according to one of the preceding Claims,
**characterized in that**
characteristics of the transmission channel are identified using the resulting difference as determined.

12. Method according to one of the preceding Claims,
**characterized in that**
- in the transmitter the created OFDM transmission signal (bs, fs) is converted to a high-frequency OFDM transmission signal (hs), and
- in the receiver the received, high-frequency OFDM transmission signal (hs) is converted back to an OFDM signal (hs').

13. Method according to one of the preceding Claims,
**characterized in that**
the OFDM transmission signal (bs, fs) is amplified by a GaAs-MMIC - Monolitic Microwave Integrated Circuits - amplifier representing a non-linear amplifier.

14. Method according to one of the preceding Claims,
**characterized in that**
- with a point-to-multipoint communication arrangement one subgroup of at least one group of all the carrier frequencies used for the multicarrier method is associated with each decentralized communication device representing a multipoint to allow simultaneous transmission of information from communication devices, and
- with a transmitter (S) arranged in the decentralized communication device and representing the multipoint component the method stages a) to d) according to Claim 1 are implemented for the allocated subgroup of the carrier frequencies used for the multicarrier method,
- with a receiver (E) in the central communication device representing the point component
-- the estimated code words (cw'1 ... n) are created from the received OFDM transmission signals (hs) according to stages e) and f) specified in Claim 1,
-- multipoint-specific, amplitude-limited OFDM signals (bs') are created and then added together for each subgroup of the carrier frequencies used for the multicarrier method according to stages b), c) and d) specified in Claim 1, and
-- the further reconstructed time-discrete OFDM transmission signal (rzs1 ... n) is created from the cumulative signal.

15. Method according to Claim 14,
**characterized in that**
- in a transmitter (S) arranged in the point component in the case of a data stream (di) to be transmitted to a multipoint, method stages a) to d) according to Claim 1 are implemented for the allocated subgroup of the carrier frequencies used for the multicarrier method,
- in a receiver (E) arranged in the multipoint in the case of the received OFDM transmission signal (hs, bs) the method stages e) to i) according to Claim 1 are implemented for the allocated subgroup of the carrier frequencies used for the multicarrier method.

## Revendications

1. Procédé de détermination d'erreurs de transmission dans un flux de données série (di) transmis à l'aide d'un procédé multiporteuse,
- dans lequel, dans un émetteur (S),
a) le flux de données série (di) est parallélisé en mots de code (cw1...n) d'une largeur de k bits,
b) à partir des mots de code (cw1...n) ainsi formés, des symboles d'émission (ss1...n) correspondants à fréquence discrète sont formés à l'aide d'un procédé de modulation spécifique à l'émetteur,
c) les symboles d'émission (ss1...n) à fréquence discrète ainsi formés sont convertis à l'aide d'une transformation discrète inverse de Fourier (IDFT) en un signal d'émission OFDM (zs1...n) discret dans le temps,
d) le signal d'émission OFDM (zs1...n) discret dans le temps ainsi formé est limité en amplitude,
dans lequel, dans un récepteur (E),
e) à partir du signal d'émission OFDM (zs1...n) discret dans le temps qui a été reçu, des symboles de réception (es1...n) contenus dans le signal d'émission OFDM (hs) reçus sont déterminés à l'aide de la transformation discrète de Fourier (FFT1),
f) à partir des symboles de réception (es1...n) à fréquence discrète ainsi définis, des mots de code d'estimation (cw'1...n) d'une largeur de k-bits sont formés par un procédé de démodulation (DMOD),
**caractérisé en ce que**
g) à partir des mots de code d'estimation (cw'1...n) ainsi formés, un signal OFDM (rzs1...n) qui correspond au signal d'émission OFDM discret dans le temps est reconstruit de manière analogue aux étapes b), c) et d),
h) à partir du signal d'émission (rzs1...n) discret dans le temps et reconstruit ainsi formé, des signaux de réception reconstruits (res1...n) à fréquence discrète sont déterminés à l'aide de la transformation discrète de Fourier (FFT2),
i) la différence entre les symboles de réception (es1...n) à fréquence discrète ainsi définis et les symboles de réception (res1...n) reconstruits ainsi définis est déterminée et
j) des erreurs de transmission sont détectées en fonction du résultat de la différence ainsi déterminée.

2. Procédé selon la revendication 1,
**caractérisé en ce que**
lors de la détection d'une erreur de transmission, une routine de traitement d'erreur est exécutée.

3. Procédé selon les revendications 1 ou 2,
**caractérisé en ce que**
lorsque la valeur de la différence entre un symbole de réception (es1...n) à fréquence discrète et le symbole de réception reconstruit (res1...n) à fréquence discrète correspondant dépasse une valeur de seuil prédéterminée (sw1, 2), une erreur de transmission individuelle au signal de réception est détectée.

4. Procédé selon la revendication 3,
**caractérisé en ce que**
lorsqu'une erreur de transmission individuelle à un symbole de réception est détectée, le symbole de réception (es1...n) à fréquence discrète erroné ou le mot de code d'estimation (cw'1...n) d'une largeur de k bits formé à partir de lui par démodulation sont corrigés de manière appropriée.

5. Procédé selon la revendication 4,
**caractérisé en ce que**
lorsqu'une erreur de transmission individuelle à un symbole de réception est détectée, le mot de code d'estimation (cw'1...n) d'une largeur de k bits correspondant est inversé.

6. Procédé selon l'une des revendications précédentes,
**caractérisé en ce que**
la transformation discrète inverse de Fourier est réalisée par une transformation rapide de Fourier inverse (IFFT) et la transformation discrète de Fourier par une transformation rapide de Fourier (FFT1, 2).

7. Procédé selon l'une des revendications précédentes,
**caractérisé en ce que**
l'amplitude du signal d'émission OFDM discret dans le temps est limitée à l'aide d'un convertisseur numérique-analogique ou à l'aide d'un processus commandé par microprocesseur, ou par évaluation de tableaux stockables en mémoire ou par un amplificateur à fréquence intermédiaire qui présente une caractéristique appropriée, à une valeur prédéterminée.

8. Procédé selon l'une des revendications précédentes,
**caractérisé en ce que**
dans l'émetteur (S), le signal d'émission OFDM (bs) limité en amplitude présente un spectre formé à l'aide de moyens de filtrage (SAW) et qui correspond à un masque spectral normalisé.

9. Procédé selon l'une des revendications précédentes,
**caractérisé en ce que**
le procédé de modulation (MOD) spécifique à l'émetteur est réalisé par un procédé de modulation absolue ou un procédé de modulation différentielle.

10. Procédé selon la revendication 9,
**caractérisé en ce que**
le procédé de modulation différentielle (MOD) est réalisé par une modulation différentielle de la phase ("Differential Phase Shift Keying") ou par une modulation différentielle de l'amplitude et de la phase ("Differential Amplitude Phase Shift Keying").

11. Procédé selon l'une des revendications précédentes,
**caractérisé en ce que**
les propriétés du canal de transmission sont détectées à l'aide du résultat de la différence que l'on a déterminé.

12. Procédé selon l'une des revendications précédentes,
**caractérisé en ce que**
- le signal d'émission OFDM (bs, fs) formé dans l'émetteur (S) est converti en un signal d'émission OFDM (hs) à haute fréquence et
- le signal d'émission OFDM (hs) à haute fréquence reçu dans le récepteur (E) est de nouveau converti en un signal OFDM (hs').

13. Procédé selon l'une des revendications précédentes,
**caractérisé en ce que**
le signal d'émission OFDM (bs, fs) est amplifié par un amplificateur MMIC à GaAs ("Monolithic Microwave integrated Circuits") qui représente un amplificateur non linéaire.

14. Procédé selon l'une des revendications précédentes,
**caractérisé en ce que**
- dans un agencement de communication point-multipoints, chaque dispositif de communication décentralisée qui représente un multipoint est associé en vue d'une transmission simultanée d'informations par les dispositifs de communication à un sous-groupe respectif d'au moins un groupe de toutes les fréquences porteuses utilisé pour le procédé multiporteuse et
- dans un émetteur (S) disposé dans le dispositif de communication décentralisée qui représente les composants multipoints, les étapes de procédé a) à d) de la revendication 1 sont exécutées pour le sous-groupe, qui lui est attribué, des fréquences porteuses utilisées pour le procédé multiporteuse,
- dans un récepteur (E) disposé dans le dispositif de communication centrale qui représente le composant point:
- des mots de code d'estimation (cw'1...n) sont formés à partir des signaux d'émission OFDM (hs) reçus, conformément aux étapes e) et f) indiquées dans la revendication 1,
-- pour chaque sous-groupe des fréquences porteuses utilisées pour le procédé multiporteuse, des signaux OFDM (bs') limités en amplitude et spécifiques au multipoint sont formés par les étapes b), c) et d) données dans la revendication 1 et sont ensuite additionnés et
-- l'autre signal d'émission OFDM (rzs1...n) discret dans le temps et reconstruit est formé à partir du signal de somme.

15. Procédé selon la revendication 14,
**caractérisé en ce que**
- dans un émetteur (S) disposé dans le composant point, dans le cas d'un flux de données (di) à transmettre à un multipoint, les étapes de procédé a) à d) de la revendication 1 sont exécutées pour le sous-groupe, qui lui a été attribué, des fréquences porteuses utilisées pour le procédé multiporteuse et
- dans un récepteur (E) disposé dans un multipoint, lorsque le signal d'émission OFDM (hs, bs) est reçu, les étapes de procédé e) à i) de la revendication 1 sont exécutées pour le sous-groupe, qui lui a été attribué, des fréquences porteuses utilisées pour le procédé multiporteuse.
